# EUROPEAN PATENT APPLICATION

(11) **EP 1 918 322 A1**
(43) Date of publication of application: **07.05.2008**
(21) Application number: 07119789.1
(22) Date of filing: 31.10.2007
(51) Int. Cl.: C08K 5/06, C08K 5/3475, C08K 5/47, C09D 9/00, C09D 9/04

(54) **Paint Stripper with Corrosion Inhibitor for Aluminium**

(30) Priority: 03.11.2006 US 856644 P
(71) Applicant: Henkel Kommanditgesellschaft auf Aktien, 40589 Düsseldorf (DE)
(72) Inventor: Foster, Kathryn Ellen, Sterling Heights, MI 48310 (US); Ciemiega, Michael Scott, Lake Orion, MI 48360 (US)
(74) Representative: Walder, Jeremy Thomas

(57) **Abstract**

A solvent based coating removal composition comprising: A) an alkoxylated aromatic alcohol; B) an organic etch inhibitor; C) an inorganic base; D) a corrosion inhibitor comprising at least one heterocyclic aromatic component; and optionally, E) chelating agents, thickeners, surfactants, and mixtures thereof is provided. The coating removal compositions are useful in cleaning coatings such as paint from substrate surfaces and may be formulated to be essentially free (or, preferably, entirely free) of organic solvents classified as volatile organic compounds or HAPS.

## Description

This invention relates to solvent-based compositions used to remove paint, particularly dried and/or cured paint and other coatings from metal surfaces, said compositions comprising etch inhibiting components making them particularly suitable for removing paint from metal surfaces, such as aluminum and its alloys. More particularly, this invention relates to a process for low temperature cleaning of paint from parts having one or more dried or cured layers of paint, and to a solution for accomplishing such cleaning at lower temperatures and with less etching of the underlying metal than conventional paint stripper compositions.

Painted metal articles and components often require re-working because of defects in the paint or from other steps in the process. These articles require coating removal, which is generally accomplished by grit blasting or chemical means. Chemical stripping of articles having components or surfaces of aluminum or its alloys has the drawback of requiring careful control of the stripping bath. The paint stripper must be aggressive enough to remove the coating, but not so aggressive that the paint stripper attacks the aluminum metal surface thereby causing etching and pitting of the surface.

Current commercial practice in the art preponderantly utilizes aqueous solutions that comprise a component of amines and a component of organic solvent generally selected from simple alcohols and monoethers of glycols, most or all with molecules that contain no more than eight carbon atoms, in order to have sufficient water solubility. The amines used are typically alkanolamines like dimethyl ethanol amine, methyl isopropanol amine, and diethanol amine but are not limited to this class of amines. Typical solvents used in the solution are alcohols and glycol ethers, such as n-butanol, ethylene glycol mono butyl ether, diethylene glycol n-butyl ether, triethylene glycol methyl ether, propylene glycol normal butyl ether, dipropylene glycol methyl ether, propylene glycol methyl ether, and propylene glycol normal propyl ether. Conventional concentrated formulas generally consist of 85 to 99% of solvent and 1 to 15% of amine, with the balance water. The prior art concentrates are usually diluted with water to from 5% to 15%, by weight or volume, for use as a working water-based paint-removing solution. Operating temperature when using the water-based solution is usually from 21 to 55°C.

Although a large number of different types of compositions have been developed for the purpose of removing paint and other organic coatings from substrate surfaces, many of the paint stripper formulations currently in commercial use contain substantial quantities of relatively volatile organic solvents which are classified as "HAPS" (Hazardous Air Pollutants). In view of the recent increase in regulatory restrictions on the use of such substances, the development of coating removal compositions which are substantially or entirely HAPS-free is currently a subject of great interest. A drawback of many of the HAPS-free formulations developed to date is that they are not as efficient in removing paint as conventional coating removal compositions, which contain substantial quantities of HAPS classified solvents. That is, the rate at which a coating is loosened from the substrate surface is often decreased significantly as the volatile organic solvent concentration is reduced. An object of the current invention is to provide a cleaner that is substantially or entirely HAPS-free which also provides adequate rates of coating removal even on completely dried and/or cured paint, and on aged paint.

Conventional paint strippers having low HAP levels generally have the drawback of giving poor paint removal performance at low temperatures and do not adequately control etching and pitting of the underlying substrate. An object of the current invention is to provide a cleaner that is substantially or entirely HAPS-free which also provides adequate rates of coating removal and reduced etching of the metal surface being cleaned.

Other alternative and/or concurrent objects will become apparent from the description below.

According to the present invention there is provided a solvent-based coating removal composition comprising:
A) an alkoxylated aromatic alcohol;
B) an organic etch inhibitor;
C) an inorganic base;
D) at least one heterocyclic aromatic component, different from B); and optionally,
E) chelating agents, thickeners, surfactants, and mixtures thereof.

In preferred embodiments thereof, the invention is directed to a solvent-based paint stripper comprising:
A) an alkoxylated aromatic alcohol such as, by way of non-limiting example, benzyl alcohol and/or phenol, which has been substituted with ethylene oxide, propylene oxide and/or butylene oxides;
B) an organic etch inhibitor selected from amines, polymers and mixtures thereof; such as, by way of non-limiting example, alkylamines, alkanolamines, polyacrylates, polyurethanes, hydroxyethyl cellulose and pheno-novolac resins;
C) an inorganic base such as, by way of non-limiting example, caustic potash;
D) at least one heterocyclic aromatic component, different from B), such as a benzoazole compound; and optionally,
E) chelating agents, thickeners, surfactants, and mixtures thereof.

In one embodiment, the paint stripper comprises an ethoxylated benzyl alcohol with an inhibitor package comprising mercaptobenzothiazole, benzotriazole and saccharin.

Other than in the operating examples, or where otherwise indicated, all numbers expressing quantities of ingredients, reaction conditions, or defining ingredient parameters used herein are to be understood as modified in all instances by the term "about". Unless otherwise indicated, all percentages are percent by weight. Paint strippers for aluminum must be aggressive enough in chemical nature to remove the paint coating from the metal surface but must not be so aggressive that they etch or pit the aluminum surface. This invention details a solvent paint stripper with a corrosion inhibition package for removing paint from aluminum substrates with low etch of the aluminum surface. The present invention is particularly suitable for use in removing cured water-borne paint as well as solvent-borne paint and the various embodiments described as preferred herein are preferred with respect to such end-use application.

The base for the paint stripper composition is an alkoxylated aromatic alcohol. The paint stripper composition includes an organic etch inhibitor and an inorganic base, such as by way of non-limiting example an alkali metal or ammonium hydroxide. In one embodiment, caustic potash is used to activate the composition. It is desirable that the formulation contains as little water as possible. Preferably, the amount of water present in the composition is less than 10, 9, 8, 7, 6, 5, 4, 3, 2, 1 wt%. Corrosion inhibitors are added to reduce etching of metal substrates, in particular aluminum, during the stripping process.

Compositions according to the invention comprise, preferably consist essentially of, most preferably consist of:
A) an alkoxylated aromatic alcohol;
B) an organic etch inhibitor selected from amines, polymers and mixtures thereof; the amines may be selected from the group consisting of alkylamines and alkanolamines; the polymers may be selected from the group consisting of polyacrylates, polyurethanes, hydroxyethyl cellulose and pheno-novolac resins;
C) an inorganic base;
D) at least one heterocyclic aromatic component, different from B); and optionally,
E) chelating agents, thickeners, surfactants, and mixtures thereof.

Suitable alkoxylated aromatic alcohols preferably are water-soluble or water-miscible and preferably are selected from alkoxylated aromatic alcohols containing one or more compounds each containing at least one aromatic ring per molecule and alkoxylate units of general formula I 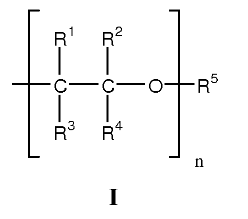 wherein: R¹, R², R³ and R⁴ are independently selected from hydrogen and methyl; R⁵ is hydrogen, a C₁-C₆ alkyl, or phenyl; and n is 2 - 10. The value of n is preferably selected to be sufficiently high so as to enable the resulting coating removal composition to be classified as HAPS-free. The alkoxylate units of Formula I are attached to the aromatic ring directly or through an ether (oxygen) linkage or an oxymethylene (-CHR⁸O-) linkage, wherein R⁸ is hydrogen or C₁-C₄ alkyl.

The use of alkoxylated aromatic alcohols permits the formulation of coating removal compositions having a low VOC (Volatile Organic Compound) content is preferred, as such alcohols are considerably less volatile than the aliphatic alcohols, glycol ethers, and other solvents typically used in such products, but provide cleaning solutions that are very effective in removing paint from substrate surfaces. In one desirable embodiment of the present invention, the coating removal composition is essentially free, or, preferably, entirely free, of any organic solvent which is legally regulated as a VOC or HAP. Depending upon the VOC or HAPS requirements of a particular application, however, conventionally used organic solvents may be blended together with the alkoxylated aromatic alcohol in order to provide coating removal compositions having a desired level of paint removal performance.

In one embodiment, the coating removal composition contains one or more compounds each containing at least one aromatic ring and alkoxylate units of general formula I. The end alkoxylate unit is preferably end-capped (terminated) with a hydrogen atom. It was unexpectedly found that neutral (pH 7) compositions considered useful as component A) tended to cause more etching than alkaline compositions. To reduce etching, it is preferred that component A) has a pH of 8-13. The aromatic ring can also contain one or more alkyl substituents of one to four carbons each. Examples of such alkyl substituents include methyl, ethyl, propyl, and isopropyl. It is generally preferred to avoid alkyl substituents longer than 4 carbon atoms, since the resulting alkoxylated aromatic alcohols typically are surfactants.

Another embodiment contains one or more alkoxylated aromatic alcohols of general formula II with a number average (Navg.) of alkoxylate units per molecule from about 2.5 to about 5, wherein R¹, R², R³, R⁴ and R⁵ are as defined in formula I, and R⁶, R⁷ and R⁸ are independently selected from hydrogen and C₁-C₄ alkyl (preferably, no more than one of R⁶ - R⁸ is a substituent other than hydrogen). R⁵ preferably is hydrogen. Also, it is preferred that the substituents R¹, R², R³ and R⁴ combine to be at least 60 atom %, more preferably at least 80 atom %, hydrogen.

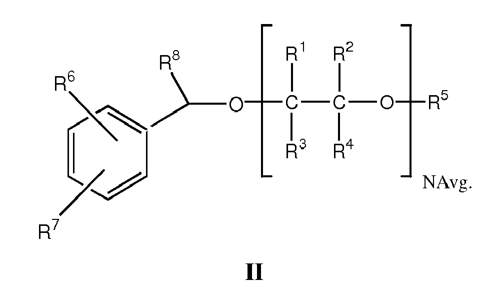

Another embodiment contains one or more alkoxylated compounds of general formula III with a number average (Navg.) of alkoxylate units from about 2.5 to about 5, wherein R¹, R², R³, R⁴ and R⁵ are as defined in formula I, and R⁶ and R⁷ are independently selected from hydrogen and C₁-C₄ alkyl. Also, it is preferred that the substituents R¹, R², R³ and R⁴ combine to be at least 60%, more preferably at least 80%, hydrogen atoms. Further, it is preferred that R⁶ and R⁷ are both hydrogen atoms. In addition, in preferred embodiments of the invention R⁵ is hydrogen.

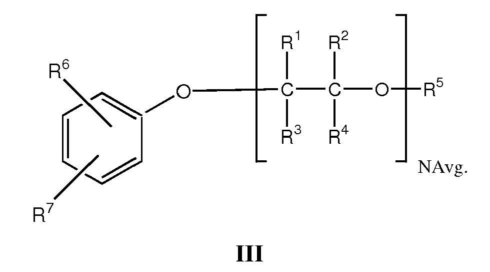

One type of alkoxylated aromatic alcohol that can be used is selected from the Genapol^{®} family of solvents obtained from Clariant. For example, Genapol^{®} BA-040 is a mixture of ethoxylated benzyl alcohols that contain from one to about 10 ethoxylate units. A small weight percentage of the alkoxylated aromatic alcohol can be compounds with more than 10 ethoxylate units. The number average (Navg.) of ethoxylate units is about four.

Another type of alkoxylated aromatic alcohol that can be used is selected from the Harcross^{®} family of products sold by Harcross Chemicals, Inc. For example, Harcross^{®} T Det P4 is a mixture of ethoxylated phenols that contain from one to about 10 ethoxylate units. A small weight percentage of the alkoxylated aromatic alcohol can be compounds with more than 10 ethoxylate units. The number average (Navg.) of ethoxylate units is about 3.3. The manufacturer reports that Harcross^{®} T Det P4 includes the following distribution of degrees of ethoxylation where the number of ethoxylate units is indicated by n: 3.3% of n=1; 11.6% of n=2; 19.9% of n=3; 22.4% of n=4; 18.6% of n=5; 12.3% of n=6; 6.7% of n=7; 3.1% of n=8; and 1.26% of n=9.

Another type of alkoxylated aromatic alcohol that can be used is represented by the ST-8329 product sold by Clariant Corporation. Clariant's ST-8329 is a mixture of ethoxylated benzyl alcohols that contain from one to about 10 ethoxylate units per molecule with a Navg. of ethoxylate units of about four.

It is to be understood that coating removal compositions of the invention are not limited to the three types of commercially available alkoxylated aromatic alcohols noted above. These types are provided only as examples of alkoxylated aromatic alcohols that can be used in the coating removal compositions of the invention. Applicant emphasizes that suitable alkoxylated aromatic alcohols include the general class of compounds defined with an alkoxylate group of formula I attached to an aromatic organic moiety. In particular, the aromatic alkoxylated solvents that can be used in the coating removal compositions of the invention are most preferably of the class of compounds defined by formula II or formula III.

Specific illustrative types of alkoxylated aromatic alcohols that can be used in the present invention include triethylene glycol monophenyl ether, tetraethylene glycol monophenyl ether, pentaethylene glycol monophenyl ether, hexaethylene glycol monophenyl ether, heptaethylene glycol monophenyl ether, triethylene glycol monobenzyl ether, tetraethylene glycol monobenzyl ether, pentaethylene glycol monobenzyl ether, hexaethylene glycol monobenzyl ether, heptaethylene glycol monobenzyl ether, water-soluble ethoxylates of propylene glycol monophenyl ether (preferably, containing an average of at least 2 oxyethylene moieties per molecule), and the like and mixtures thereof.

The coating removal compositions of the present invention additionally contain a component B) an organic etch inhibitor selected from amines, polymers and mixtures thereof, which preferably are water-soluble or water-miscible.

Alkanolamines and alkylamines are preferred types of amine. The preferred alkanolamines are selected from ethanolamine, diethanolamine, triethanolamine, dimethylethanolamine, diisopropanolamine, isopropanolamine, methylisopropanol-amine, n-butyldiethanolamine, 2-methylaminoethanol, n-butylaminoethanol, diethyl-aminoethanol, 2-amino-2-methyl-1-propanol, or phenyl diethanolamine. Amines which do not contain hydroxyl groups such as alkylamines (e.g., triethylamine) and oxazolidines can also be used.

Preferred polymers suitable for use in the invention are those water soluble or water dispersible resins which reduce etching of the metal to be treated by the cleaner, having low amounts of VOC, preferably no VOCs, that are stable in a working bath of the cleaner at temperatures of at least 220 °F. Preferred polymers include polyacrylates, polyurethanes, hydroxyethyl cellulose and pheno-novolac resins.

One or more inorganic bases are also present in the coating removal composition as component C). Examples of suitable inorganic bases include alkali metal and ammonia hydroxides, alkali metal carbonates, alkali metal silicates, alkali metal phosphates, and other basic alkali metal salts, provided that the base does not precipitate in the final composition. Without being bound by a single theory, the alkali in this solvent based paint stripper is believed to activate the paint surface. Preferred bases are alkali metal hydroxides, such as by way of non-limiting example KOH.

Component D) at least one heterocyclic aromatic component, different from B), which provides corrosion inhibition. Suitable heterocyclic aromatic components include benzotriazoles and oxides of thereof. Examples of suitable heterocyclic aromatic compositions include compositions having the general formula IV: 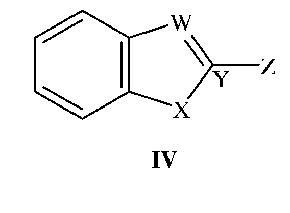 wherein: W is nitrogen, X is nitrogen or sulfur, Y is nitrogen or carbon, and Z, if present is SH; each of X, Y and Z having hydrogen substituents sufficient to satisfy bond requirements to achieve a zero charge state. Specific examples of heterocyclic aromatic compounds useful as corrosion inhibitors include, but are not limited to, benzotriazole, mercaptobenzothiazole and 2,3,-dihydroxy-1,2,-benzothiazol-3-one-1,1 -dioxide.

Additional ingredients may also be present in the coating removal composition such as, for example, chelating agents, thickeners, surfactants, and any of the other additives conventionally used in paint stripping formulations.

It is generally preferred that the pH of the cleaning solution be from about 9 to about 14, more preferably from about 11 to about 14.

The concentrations of the individual ingredients of the coating removal compositions of the present invention may be varied as may be desired or needed depending upon the type of coating to be removed and the rate at which coating removal is to be effected. Optimal concentrations for a particular application may be readily determined by a worker skilled in the art using standard experimental methods.

In a working paint-removing solution, the concentration of the alkoxylated aromatic alcohol component as described above preferably is at least, with increasing preference in the order given, 75.0, 80.0, 85.0, 90.0, or 95.0% The concentration of the organic etch inhibitor as described above preferably is at least, with increasing preference in the order given, 0.1, 0.15, 0.2, 0.25, 0.3, 0.35, 0.4, 0.45, 0.5, 0.55, 0.6, 0.65, 0.7, 0.75, 0.8, 0.85, 0.9, 1.0, 1.5, 2.0, 2.5, 3.0, 3.5, 4.0 4.5, 5.0, 5.5, 5.6, 5.8, 6.0. 6.1, 6.2, 6.3, 6.4, 6.5, 6.6, 6.7, 6.8, 6.9, or 7.0 % and independently preferably, at least for economy, is not more than, with increasing preference in the order given, 10.0, 9.0, 8.5, 8.0, 7.9, 7.8, 7.7, 7.6, 7.5, 7.4, or 7.2 %. The concentration of the inorganic base component preferably is at least, with increasing preference in the order given, 1, 1.1, 1.2, 1.3, 1.4, 1.5 1.6, 1.7, 1.8, 1.9. 2.0, 2.1, 2.2, 2.3, 2.4, 2.5, 2.6, 2.7, 2.8, 2.9 or 3.0% and independently preferably, at least for economy, is not more than with increasing preference in the order given, 5, 4.5, 4.2, 4.0, 3.9, 3.8, 3.7, 3.6, 3.5, 3.4, 3.3, or 3.2%. Concentration of the heterocyclic aromatic component D) as described above preferably is at least, with increasing preference in the order given, 1.0, 1.25, 1.5, 1.75, 2.0, 2.25, 2.5, 2.75, 3.0, 3.25, 3.5, 3.75, 4.0 4.5, or 5.0 % and independently preferably, at least for economy, is not more than, with increasing preference in the order given, 10.0, 9.0, 8.5, 8.0, 7.5, 7.0, 6.5, 6.0 or 5.5%.

In general, however, preferred coating removal compositions may be formulated within the following parameters:

| Ingredient | Preferred, Wt % | More Preferred, Wt % |
|---|---|---|
| Alkoxylated Aromatic Alcohol | 75.0-96.0 | 80.0-92.0 |
| Organic etch inhibitor | 0.3-10.0 | 0.4- 8.0 |
| Inorganic Base | 1.0- 5.0 | 2.0- 4.0 |
| Corrosion inhibitor | 0.5-10.0 | 2.0- 7.0 |

In one embodiment of the invention, the coating removal composition is comprised of 84 to 90 weight % of one or more alkoxylated aromatic alcohols selected from the group consisting of ethoxylated benzyl alcohols, 5 to 7 weight % alkanolamine, 2 to 4 weight % alkali metal hydroxide, 2 to 3 weight % of a mixture of heterocyclic aromatic benzoazole components and 1 to 2 weight % of a benzisothiazolone dioxide.

In another embodiment of the invention, the coating removal composition is comprised of 86 to 95 weight % of one or more alkoxylated aromatic alcohols selected from the group consisting of ethoxylated benzyl alcohols, 5 to 7 weight % alkanolamine and/or 0.3 to 0.9 wt% acrylic polymer, 2 to 4 weight % alkali metal hydroxide, 2 to 3 weight % of a mixture of heterocyclic aromatic benzoazole components and 1 to 2 weight % of a benzisothiazolone dioxide.

Compositions of the invention can be made by combining components A), B) and C), and thereafter removing water from the formulation by heating. It is preferred that as much water as possible is removed from the composition, to lower the etch rate. After water removal, corrosion inhibitor D)and optional component E), if used, is added.

Paint (or other organic coating) can be removed from a paint covered surface by contacting the surface with a coating removal composition of the invention. Although the methods of contacting the surface with the coating removal composition can be accomplished in a number of ways, immersion and spraying are the most preferred methods. If the surface to be cleaned is readily accessible, then spraying is generally preferred. The mechanical force of the impinging coating removal composition facilitates removal of the paint. On the other hand, if the surface to be cleaned has recesses or other shapes that are not readily accessible, immersion will generally be preferred. Of course, both methods can be used in combination and/or varied in ways apparent to those skilled in the art. The optimal component concentrations and temperature of the coating removal composition depend on the method of contact and the type of coating to be removed, among other factors. It is to be understood however, that those skilled in the art can determine optimal conditions for particular coating removal applications by minimal experimentation.

The contact time needed to effect a substantial removal of paint from a surface will depend on the nature and thickness of the paint, the composition of the coating removal composition including the ingredient concentrations, the temperature of the composition, and other factors. With some paints and under some conditions, contact times of a few minutes (e.g., 2-3 minutes) may be sufficient.

If the coating removal composition is sprayed onto a surface, the spraying pressure will usually range from 1.3 bars to 8.0 bars absolute pressure. The temperature of the coating removal composition will usually range from 15°C to 90°C. Higher temperatures and pressures generally increase the rate at which the paint is removed from the surface. In one embodiment, the working temperature range is higher. In this embodiment, the temperature of the coating removal composition will usually range from 75°C to 105°C. The temperature of the coating removal composition preferably is at least, with increasing preference in the order given, 25, 30, 35, 40, 45, 50, 55, 60, 63, 65, 67, 69, 71, 73, 75°C and independently preferably, at least for economy, is not more than with increasing preference in the order given, 110, 108, 106, 103, 102, 101, or 100°C.

The invention and its benefits will be better understood with reference to the following examples. These examples are intended to illustrate specific embodiments within the overall scope of the invention as claimed, and are not to be understood as limiting the invention in any way.

### Examples

### Example 1

To determine the amount of etch occurring on the substrate being cleaned of paint, Quality Aluminum-clad 2024-T3 panels from an aerospace manufacturer were used as test substrates. Candidate paint stripper baths were heated to working temperature (200 degrees F) and a panel immersed in the stripper for 30 minutes. After the 30 minutes, the panel was removed and hung for 2 minutes to cool the metal to 105-110 degrees F. Then the panel was rinsed in DI water and forced air dried. Panels were inspected visually and the gloss at 20° was measured on a gloss meter (Novo-gloss Statistical Glossmeter, Elcometer 402), which results are shown in Table 1.

**Table 1: GLOSS RESULTS**

| **Panel #** | **Formula** | **Gloss (Gloss units)** |
|---|---|---|
| Control* | None | 1038 |
| Z-1 | 97% pH 7 Benzyl alcohol ethoxylate + 3% KOH | 14.4 |
| Z-2 | 96% pH 7 Benzyl alcohol ethoxylate + 3% KOH + 1% Benzotriazole | 14.1 |
| Z-3 | 96.5% pH 7 Benzyl alcohol ethoxylate + 3% KOH + 0.5% Mercaptobenzothiazole | 7.9 |
| Z-4 | 95.5% pH 7 Benzyl alcohol ethoxylate + 3% KOH + 0.5% Mercaptobenzothiazole + 1% Benzotriazole | 14.1 |
| Z-5 | 95% pH 7 Benzyl alcohol ethoxylate + 3% KOH + 1% Mercaptobenzothiazole + 1% Benzotriazole | 368 |
| Z-36 | 73% pH 7 Benzyl alcohol ethoxylate + 25% 2-amino-2-methyl-1-propanol + 1 % Mercaptobenzo-thiazole + 1% Benzotriazole | 854 |
| Z-47 | 97% pH 12 Benzyl alcohol ethoxylate + 3% KOH | 316 |
| Z-49 | 95.5% pH 12 Benzyl alcohol ethoxylate + 3% KOH + 1% Mercaptobenzothiazole + 1% Benzotriazole + 0.5% Sucrose | 753 |
| Z-52 | 95.5% pH 12 Benzyl alcohol ethoxylate + 3% KOH + 1% Mercaptobenzothiazole + 1% Benzotriazole + 0.5% 2,3,-dihydroxy-1,2,-benzothiazol-3-one-1,1-dioxide | 992 |
| Z-78 | 87.75% pH 12 Benzyl alcohol ethoxylate + 6.25% 2-amino-2-methyl-1-propanol + 3% KOH + 1% Benzotriazole + 1% Mercaptobenzothiazole + 1% 2,3,-dihydroxy-1,2,-benzothiazol-3-one-1,1-dioxide. | 1008 |

| | | |
|---|---|---|
| *Control panel was a highly polished aluminum panel with no coating and that had not undergone any stripping or other processes. | | |

Stripping ability of candidate paint stripper formulations was assessed by stripping a painted aluminum panel and timing the paint stripper until 100% of the coating had been removed. Paint stripping was conducted at 200 degrees F with no mixing. The lack of mixing approximated a more demanding removal environment since manufacturers generally recommend mixing paint stripper baths during use to decrease stripping time.

**Table 2: STRIPPING RESULTS**

| Panel # | **Percentage Coating Removal** | **Stripping Time (min)** |
|---|---|---|
| Z-1 | 100% | <30 |
| Z-2 | 100% | <30 |
| Z-3 | 100% | <30 |
| Z-4 | 100% | <30 |
| Z-5 | 100% | <30 |
| Z-36 | 0% | >240 |
| Z-47 | 100% | <30 |
| Z-49 | 100% | <30 |
| Z-52 | 100% | <30 |
| Z-78 | 100% | <30 |

### Example 2

The formula for Panel No. Z-78 was used for this example with 0.5 wt% polyacrylate and extra benzyl alcohol ethoxylate being substituted for the amine in the formulation. The composition was tested according to the procedure of Example 1, except that the panel was contacted with the composition for 22 minutes. The composition stripped the paint from the aluminum and was not observed to have etched the panel.

## Claims

1. A solvent-based coating removal composition comprising:
A) an alkoxylated aromatic alcohol;
B) an organic etch inhibitor;
C) an inorganic base;
D) at least one heterocyclic aromatic component, different from B); and optionally:
E) chelating agents, thickeners, surfactants, and mixtures thereof.

2. A coating removal composition as claimed in claim 1 wherein:
- the alkoxylated aromatic alcohol (A) is selected from the group consisting of ethoxylated unsubstituted benzyl alcohols, ethoxylated unsubstituted phenols, and mixtures thereof; and/or
- the organic etch inhibitor (B) is selected from amines, polymers and mixtures thereof which reduce etching of the metal substrate by the coating removal composition.

3. A coating removal composition as claimed in claim 1 wherein the alkoxylated aromatic alcohol (A) contains at least one aromatic ring and alkoxylate units of general formula I. 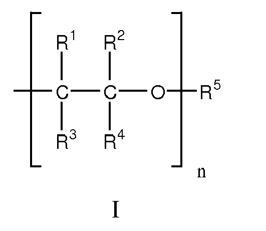 wherein: R¹, R², R³ and R⁴ are independently selected from hydrogen and methyl; R⁵ is hydrogen, a C₁-C₆ alkyl, or phenyl; and n is 2- 10.

4. A coating removal composition as claimed in claim 1, wherein component (A) comprises a mixture of alkoxylated aromatic alcohols of general formula II with a number average Navg. of alkoxylate units from about 2.5 to about 5, and wherein R¹, R², R³, R⁴ and R⁵ are as defined for formula I, and R⁶, R⁷ and R⁸ are independently selected from hydrogen and C₁-C₄ alkyl.

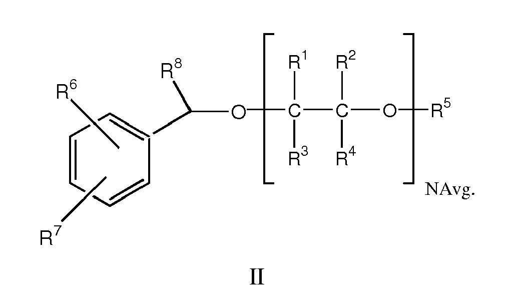

5. A coating removal composition as claimed in claim 1, wherein component (A) comprises a mixture of alkoxylated aromatic alcohols of general formula III with a number average Navg. of alkoxylate units from about 2.5 to about 5, wherein R¹, R², R³, R⁴ and R⁵ are as defined for formula I, and R⁶ and R⁷ are independently selected from hydrogen and C₁-C₄ alkyl.

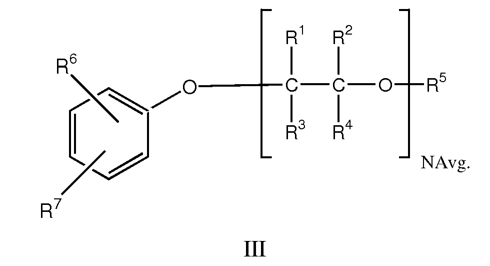

6. A coating removal composition as claimed in any of the preceding claims, wherein:
- the alkoxylated aromatic alcohol component (A) is present in an amount in the range of from 75-96%; and/or
- the organic etch inhibitor (B) comprises either: an amine component at a concentration that is at least 2 and is not more than 10%; or a polymer component at a concentration that is at least 0.3 and not more than 10%; and/or
- the concentration of the inorganic base (C) is at least 1% and is not more than 5%; and/or
- component D) comprises either: at least one benzoazole compound and saccharin; or at least one of benzotriazole, mercaptobenzothiazole and 2,3,-dihydroxy-1,2,-benzothiazol-3-one-1,1-dioxide.

7. A coating removal composition as claimed in any of the preceding claims comprising a mixture of heterocyclic aromatic compositions of general formula IV 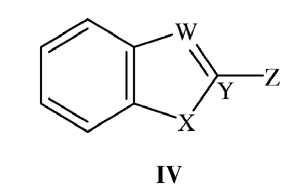 wherein: W is nitrogen, X is nitrogen or sulfur, Y is nitrogen or carbon, and Z, if present is SH; each of X, Y and Z having hydrogen substituents sufficient to satisfy bond requirements to achieve a zero charge state.

8. A coating removal composition as claimed in claim 1, comprising:
- in the range of from 84 to 90 weight % of one or more alkoxylated aromatic alcohols selected from the group consisting of ethoxylated benzyl alcohols;
- in the range of from 5 to 7 weight % alkanolamine;
- in the range of from 2 to 4 weight % alkali metal hydroxide;
- in the range of from 2 to 3 weight % of a mixture of heterocyclic aromatic benzoazole components: and
- in the range of from 1 to 2 weight % of a benzisothiazolone dioxide.

9. A method of removing a coating from a surface of a substrate, preferably aluminium, said method comprising:
contacting a coating removal composition as claimed in any of the preceding claims with said coating at a temperature between 120°F to 250°F (49°C to 121 °C) for a time effective to remove said coating from said surface of said substrate.

10. A method of making a solvent based coating removal composition as claimed in claim 1, comprising the steps of:
mixing 75.0 to 96.0 grams of alkoxylated aromatic alcohol and 0.3 to 10 grams of organic etch inhibitor;
adding inorganic base to the mixture in an amount sufficient to provide 1.0 to 5.0 grams anhydrous inorganic base;
removing at least 10% of the total water in the mixture; and
adding 0.5 to 10 grams of corrosion inhibitor selected from heterocyclic aromatic compounds, different from said organic etch inhibitor.
